# FASCICULE DE BREVET EUROPEEN

(11) **EP 0 780 703 B1**
(45) Date de publication et mention de la délivrance du brevet: **13.05.2009**
(21) Numéro de dépôt: 96203527.5
(22) Date de dépôt: 12.12.1996
(51) Int. Cl.: G01V 3/02

(54) **Système de détection de présence d'un objet conducteur d'électricité, notamment un circuit intégré présent sur une carte à puce**
System zur Feststellung der Anwesenheit eines leitenden Objektes, insbesondere einer integrierten Schaltung für eine Chipkarte
System for the detection of the presence of a conductive object, specifically an integrated circuit on a chip card

(30) Priorité: 20.12.1995 FR 9515178
(43) Date de publication de la demande: 25.06.1997
(73) Titulaire: NXP B.V., 5656 AG Eindhoven (NL)
(72) Inventeur: Maugars, Philippe, 75008 Paris (FR)
(74) Mandataire: Röggla, Harald

(56) Documents cités:
- DE-A- 2 716 109
- US-A- 4 879 476
- IBM TECHNICAL DISCLOSURE BULLETIN, vol. 22, no. 10, Mars 1980, NEW YORK, US, pages 4615-4616, XP002012963 ANONYMOUS: "Automatic Module Detection. March 1980."

## Description

La présente invention concerne un système de détection de présence d'un objet conducteur d'électricité, système muni d'un premier et d'un deuxième contacts destinés à être mis en court-circuit par ledit objet, muni en outre d'un dispositif de gestion des potentiels électriques des contacts.

Un tel système est décrit dans l'article "Automatic Module Detection", de Mr. S. Meguro, paru dans le IBM Technical Disclosure Bulletin Vol.22, No. 10 de Mars 1980. Ce système permet de détecter la présence d'un module dans son logement, le module disposant de deux contacts dédiés à la mise en court-circuit de deux bornes internes au logement, l'une reliée au niveau logique 1 sous forte impédance, ainsi qu'à une logique de contrôle, l'autre étant reliée au niveau logique 0, lequel signale à la logique de contrôle, lors de la mise en court-circuit des deux bornes par les contacts du module, la présence de ce dernier dans son logement.

Un tel dispositif ne peut convenir à la détection de la présence dans son lecteur d'une carte à puce. En effet, le nombre de contacts présents sur un objet de ce dernier type est limité, et il est peu souhaitable d'en utiliser deux uniquement à des fins de détection. Il est plus avantageux d'utiliser un des contacts servant à l'alimentation du circuit intégré présent sur la carte, de préférence sa borne positive d'alimentation. Toutefois, le potentiel appliqué à cette borne n'est pas constant dans le temps. En effet, une insertion de la carte sous tension d'alimentation non nulle pourrait endommager le circuit intégré. Le potentiel de celui des contacts du système de détection servant à l'alimentation du circuit intégré doit donc être maintenu à zéro dans une phase dite initiale. Lorsque la carte est correctement enfichée dans son logement, sa présence est détectée et ce n'est qu'alors que la tension d'alimentation doit être appliquée à la borne positive d'alimentation du circuit intégré, amorçant ainsi la phase de fonctionnement proprement dite. Le système de détection doit donc pouvoir opérer sur la base de deux potentiels d'alimentation différents.

L'invention a pour but de répondre à ces exigences en présentant un système de détection de présence capable de gérer et d'interpréter des signaux qui peuvent prendre différents états.

En effet, un système de détection selon la présente invention est **caractérisé en ce que** le dispositif de gestion comporte des moyens pour appliquer au deuxième contact, sous une impédance élevée devant la résistance générée par le contact avec l'objet conducteur à détecter, un potentiel donné, dit potentiel de référence, et pour émettre un signal indiquant que le potentiel du deuxième contact est voisin du potentiel de référence.

Un mode de réalisation de l'invention présente un système de détection tel que décrit dans le paragraphe introductif, **caractérisé en ce que** le dispositif de gestion comporte au moins quatre éléments résistifs montés en série entre une borne négative et une borne positive d'alimentation, lesquels éléments résistifs présentent à leurs bornes trois noeuds intermédiaires, appelés successivement depuis la borne négative d'alimentation vers la borne positive d'alimentation, premier, deuxième et troisième noeuds intermédiaires, en ce que le dispositif de gestion comporte en outre un module d'alimentation, lequel génère une tension qui peut prendre soit une valeur voisine du potentiel de la borne négative d'alimentation, soit une valeur voisine du potentiel de la borne positive d'alimentation, et en ce que le premier contact est connecté à la sortie du module d'alimentation, tandis que le potentiel du deuxième noeud intermédiaire est appliqué au deuxième contact sous une impédance élevée devant la résistance générée par le contact avec l'objet conducteur à détecter, et en ce que le dispositif de gestion est muni de moyens pour effectuer la comparaison entre le potentiel du deuxième contact et celui du premier noeud intermédiaire d'une part, et le potentiel du deuxième contact et celui du troisième noeud intermédiaire d'autre part.

Un tel système permet de détecter la présence d'une carte à puce dans son lecteur tout en gérant l'alimentation électrique du circuit intégré présent sur la carte. Dans une phase initiale, le système applique à la borne positive d'alimentation du circuit intégré une tension nulle. Cette phase initiale dure jusqu'à la détection effective de l'insertion de la carte par identification de la tension nulle appliquée au deuxième contact par le court-circuit réalisé par la borne positive d'alimentation du circuit intégré présent sur la carte entre les deux contacts. Pendant la phase de fonctionnement le système applique à ladite borne positive d'alimentation une tension d'alimentation voisine de celle du système de détection. Il est alors capable de détecter un arrachage de la carte au cours de cette phase de fonctionnement normal en signalant une chute du potentiel de celui des contacts du système de détection qui n'est pas relié au module d'alimentation.

Dans un mode de réalisation particulier de l'invention, un tel système de détection est **caractérisé en ce que** le deuxième noeud intermédiaire est relié au deuxième contact au moyen d'un amplificateur opérationnel suiveur, placé en série avec un élément résistif de forte résistance.

Un mode de réalisation particulièrement avantageux de l'invention présente un système de détection **caractérisé en ce que** les moyens de comparaison inclus dans le dispositif de gestion comportent un premier et un deuxième amplificateurs opérationnels comparateurs, le premier de ceux-ci ayant sa borne inverseuse reliée au deuxième contact, sa borne non-inverseuse reliée au premier noeud intermédiaire, et sa sortie à une entrée d'une porte logique NON-OU EXCLUSIF à deux entrées, le deuxième amplificateur opérationnel comparateur ayant sa borne inverseuse reliée au deuxième contact, sa borne non-inverseuse reliée au troisième noeud intermédiaire, et sa sortie reliée à l'autre entrée de ladite porte logique NON-OU EXCLUSIF.

Afin d'éviter d'endommager le circuit intégré par une brusque variation de la tension appliquée à sa borne positive d'alimentation, il est prudent de faire croître celle-ci de manière progressive. Cette augmentation progressive risque cependant de perturber les résultats des comparaisons des potentiels des noeuds intermédiaires avec le potentiel du deuxième contact, et donc de signaler de manière intempestive un arrachage de la carte. Une variante de l'invention a pour but de remédier à cet inconvénient en proposant un système de détection **caractérisé en ce que** le module d'alimentation inclus dans le dispositif de gestion génère une tension qui, au cours d'un régime transitoire, évolue progressivement depuis un potentiel voisin de celui de la borne négative d'alimentation vers un potentiel voisin de celui de la borne positive d'alimentation, puis, au cours d'un régime permanent conserve ledit potentiel, et en ce que le dispositif de gestion est muni d'un dispositif dit de masquage lui permettant d'ignorer les comparaisons entre les potentiels des noeuds intermédiaires et celui du deuxième contact pendant la durée du régime transitoire.

Un mode de réalisation préféré de cette variante de l'invention présente un système de détection **caractérisé en ce que** le dispositif de masquage comporte un monostable dont la sortie est au niveau logique 1 pendant une durée prédéterminée correspondant à la durée du régime transitoire et au niveau logique 0 au cours du régime permanent, monostable dont la sortie est connectée à une entrée d'une porte logique OU à deux entrées, la sortie des moyens de comparaison étant connectée à l'autre entrée de ladite porte logique OU.

L'invention sera mieux comprise à l'aide de la description suivante de quelques modes de réalisation, faite à titre d'exemple et en regard des dessins annexés, dans lesquels :
- la figure 1 est un schéma fonctionnel partiel d'un système de détection selon l'invention,
- la figure 2 est un schéma fonctionnel partiel d'un système de détection selon un mode de réalisation avantageux de l'invention,
- la figure 3 est un schéma fonctionnel partiel d'un système de détection selon une variante de l'invention,
- la figure 4 est un schéma fonctionnel partiel d'un dispositif de masquage inclus dans un mode de réalisation préféré d'un système de détection selon une variante de l'invention, et
- la figure 5 est un ensemble de chronogrammes représentant l'évolution dans le temps de signaux présents dans un système de détection selon cette dernière variante de l'invention.

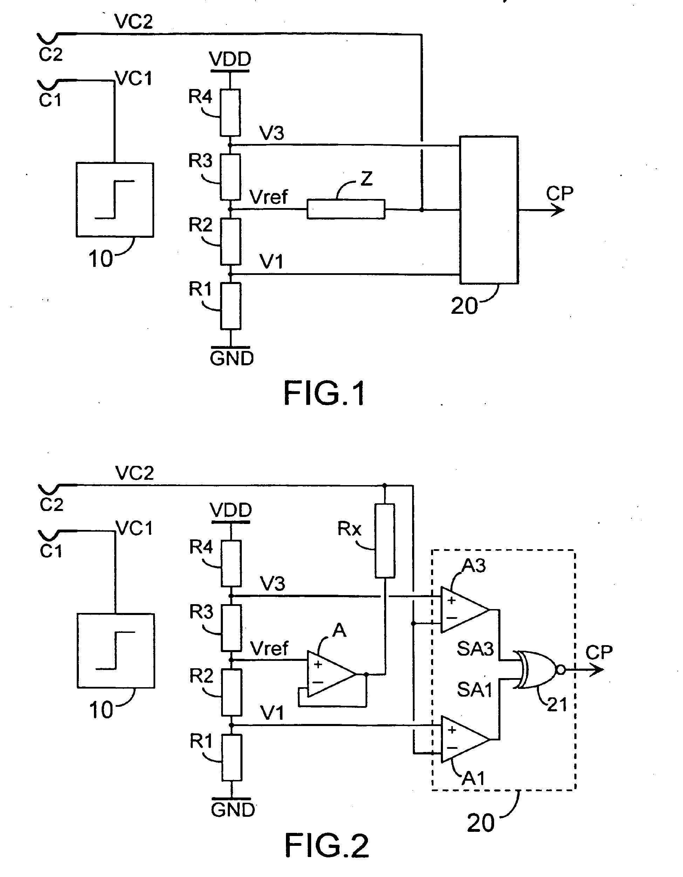

La figure 1 représente partiellement un système de détection de présence d'un objet conducteur d'électricité, en l'occurrence la borne positive d'alimentation d'un circuit intégré présent sur une carte à puce. Ce système est muni d'un premier contact C1 et d'un deuxième contact C2, destinés à être mis en court-circuit par ledit objet. Il est en outre muni d'un dispositif de gestion des potentiels électriques des contacts. Celui-ci comporte au moins quatre éléments résistifs R1, R2, R3, R4, montés en série entre une borne négative GND et une borne positive VDD d'alimentation, lesquels éléments résistifs présentent à leurs bornes trois noeuds intermédiaires, appelés successivement depuis la borne négative d'alimentation vers la borne positive d'alimentation, premier, deuxième et troisième noeuds intermédiaires. Ce dispositif de gestion comporte en outre un module d'alimentation 10, lequel génère une tension VC1 qui peut prendre soit une valeur voisine du potentiel de la borne négative d'alimentation GND, soit une valeur voisine du potentiel de la borne positive d'alimentation VDD. Le premier contact C1 est connecté à la sortie du module d'alimentation 10, tandis que le potentiel du deuxième noeud intermédiaire, appelé Vref, est appliqué au deuxième contact C2 sous une impédance Z élevée devant la résistance générée par le contact avec l'objet conducteur à détecter. Le dispositif de gestion est enfin muni de moyens 20 pour effectuer la comparaison entre le potentiel du deuxième contact, appelé VC2, et celui du premier noeud intermédiaire, appelé V1, d'une part, et le potentiel VC2 du deuxième contact et celui du troisième noeud intermédiaire, appelé V3, d'autre part. La sortie CP de ces moyens de comparaison signale, lorsqu'elle est au niveau logique 1, la présence de l'objet à détecter.

La figure 2 représente partiellement un système de détection selon un mode de réalisation avantageux de l'invention, dans lequel le deuxième noeud intermédiaire est relié au deuxième contact C2 au moyen d'un amplificateur opérationnel suiveur A, placé en série avec un élément résistif de forte résistance Rx. De plus, les moyens de comparaison 20 inclus dans le dispositif de gestion comportent un premier et un deuxième amplificateurs opérationnels comparateurs, le premier de ceux-ci, appelé A1, ayant sa borne inverseuse reliée au deuxième contact C2, sa borne non-inverseuse reliée au premier noeud intermédiaire, et sa sortie SA1 à une entrée d'une porte logique NON-OU EXCLUSIF à deux entrées 21, le deuxième amplificateur opérationnel comparateur, appelé A3, ayant sa borne inverseuse reliée au deuxième contact C2, sa borne non-inverseuse reliée au troisième noeud intermédiaire, et sa sortie SA3 reliée à l'autre entrée de ladite porte logique NON-OU EXCLUSIF 21.

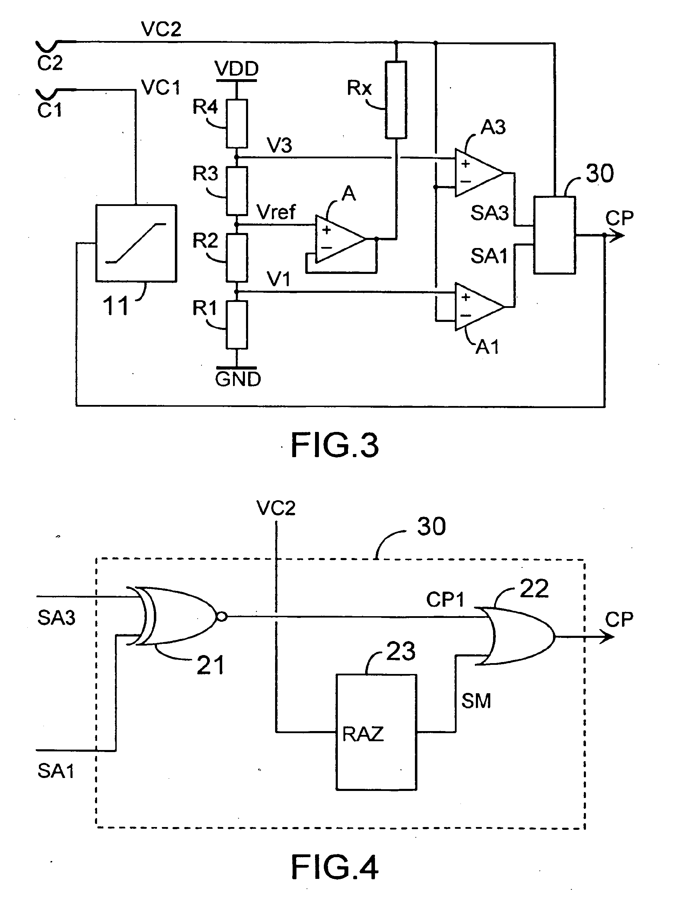

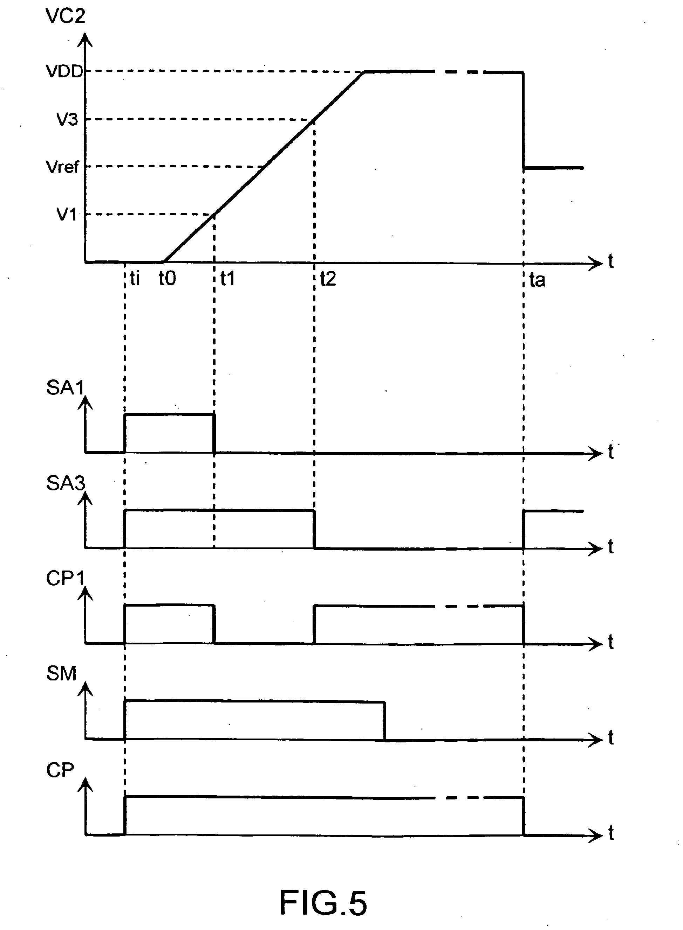

La figure 3 représente partiellement un système de détection selon une variante de l'invention, dans lequel le module d'alimentation 11 inclus dans le dispositif de gestion génère une tension VC1 qui, au cours d'un régime transitoire, évolue progressivement depuis un potentiel voisin de celui de la borne négative d'alimentation GND vers un potentiel voisin de celui de la borne positive d'alimentation VDD, puis, au cours d'un régime permanent conserve ledit potentiel. Le dispositif de gestion est de plus muni d'un dispositif 30 dit de masquage lui permettant d'ignorer les comparaisons entre les potentiels V1 et V3 des noeuds intermédiaires et le potentiel VC2 du deuxième contact pendant la durée du régime transitoire. La figure 4 représente partiellement un dispositif de masquage inclus dans un mode de réalisation préféré d'un système de détection selon cette variante de l'invention, dans lequel le dispositif de masquage 30 comporte un monostable 23 dont la sortie SM est au niveau logique 1 pendant une durée prédéterminée correspondant à la durée du régime transitoire et au niveau logique 0 au cours du régime permanent, monostable dont la sortie est connectée à une entrée d'une porte logique OU à deux entrées 22, la sortie des moyens de comparaison CP1 étant connectée à l'autre entrée de ladite porte logique OU 22. La figure 5 permet d'observer l'évolution des signaux VC2, SA1, SA3, CP1, SM et CP au cours du temps.

Dans la phase initiale, c'est-à-dire avant la détection d'un objet conducteur entre les deux contacts C1 et C2, le module d'alimentation délivre au contact C1 une tension VC1 nulle. Le contact C2 étant en l'air, son potentiel est imposé à Vref. Ce potentiel est inférieur à V3 tout en étant supérieur à V1. La sortie SA1 du comparateur A1 est donc au niveau logique 0, tandis que la sortie SA3 du comparateur A3 est au niveau logique 1. La sortie CP1 de la porte NON-OU EXCLUSIF 21 est donc au niveau logique 0. La sortie du monostable 23 étant au niveau logique 0 au début de la phase initiale, la sortie CP de la porte OU 22 est donc au niveau logique 0.

A l'instant ti, un objet conducteur d'électricité, en l'occurrence la borne positive d'alimentation d'un circuit intégré présent sur une carte à puce, met en court-circuit les contacts C1 et C2. La tension nulle VC1 est alors appliquée au contact C2, l'impédance séparant le contact C2 du potentiel Vref étant élevée devant la résistance générée par le contact avec l'objet conducteur. Ce potentiel est à la fois inférieur à V3 et à V1. Les sorties SA1 et SA3 des comparateurs A1 et A3 sont donc toutes deux au même niveau logique 1. La sortie CP1 de la porte NON-OU EXCLUSIF 21 est donc au niveau logique 1. La sortie CP de la porte OU 22 passe donc au niveau logique 1, signalant ainsi la présence de la carte à puce dans son logement. Cette information est transmise au module d'alimentation 11, qui peut alors entrer dans le régime transitoire et procéder à l'augmentation progressive de la tension VC1 jusqu'à VDD. Simultanément, le passage au niveau logique 0 a remis à zéro le monostable qui, pendant toute la durée de cette augmentation progressive, délivrera un signal de sortie SM au niveau logique 1. Ceci permet de masquer, en forçant au niveau logique 1 la sortie CP de la porte OU logique 22, les comparaisons entre les potentiels V1 et V3 des noeuds intermédiaires et le potentiel VC2 du deuxième contact pendant la durée du régime transitoire. En effet, à partir de t0, la tension VC2 croît avec le temps, ainsi que l'on peut l'observer sur la figure 5. A l'instant t1, lorsque VC2 dépasse V1, la sortie SA1 du comparateur A1 passe au niveau logique 0, tandis que la sortie SA3 du comparateur A3 reste au niveau logique 1. La sortie CP1 de la porte NON-OU EXCLUSIF 21 passe donc au niveau logique 0. Ceci signalerait de manière intempestive un arrachage de la carte à puce de son logement en l'absence du dispositif de masquage. Cependant, la sortie du monostable 23 étant au niveau logique 1 pendant toute la durée du régime transitoire, la sortie CP de la porte OU 22 est maintenue au niveau logique 1. A l'instant t2, lorsque VC2 dépasse V3, la sortie SA3 du comparateur A3 passe au niveau logique 0, tandis que la sortie SA1 du comparateur A1 reste au niveau logique 0. La sortie CP1 de la porte NON-OU EXCLUSIF 21 passe donc à nouveau au niveau logique 1. Le régime permanent est établi lorsque VC2 a atteint le potentiel VDD et lorsque la sortie du monostable 23 a repris le niveau logique 0, sans influer sur le niveau logique du signal CP, celui-ci étant maintenu à 1 par la sortie CP1 de la porte NON-OU EXCLUSIF 21. A l'instant ta, la carte à puce est arrachée de son logement. Le court-circuit entre les contacts C1 et C2 est rompu, et le potentiel Vref est appliqué au contact C2. La sortie SA3 du comparateur A3 passe au niveau logique 1, tandis que la sortie SA1 du comparateur A1 reste au niveau logique 0. La sortie CP1 de la porte NON-OU EXCLUSIF 21 passe alors à nouveau au niveau logique 0. Le signal CP de sortie de la porte OU 22 passe donc également au niveau logique 0, signalant ainsi l'arrachage de la carte.

Il est à noter que si le câblage des entrées inverseuses et non-inverseuses des amplificateurs opérationnels comparateurs A1 et A3 était inversé seuls les signaux de sortie SA1 et SA3 s'en trouveraient inversés, l'évolution de la sortie de la porte NON-OU EXCLUSIF 21 demeurant inchangée, et donc la fonctionnalité du dispositif de gestion serait parfaitement identique.

D'autre part, bien que le cas de figure décrit ci-dessus traite plus particulièrement de la détection de la présence d'une carte à puce dans son logement, il va de soi qu'il peut être aisément transposé à la détection de tout objet conducteur d'électricité.

## Revendications

1. Système de détection de présence d'un objet conducteur d'électricité, système muni d'un premier et d'un deuxième contacts (C1 ; C2) destinés à être mis en court-circuit par ledit objet, muni en outre d'un dispositif de gestion des potentiels électriques des contacts, **caractérisé en ce que** le dispositif de gestion comporte au moins quatre éléments (R1 ; R2 ; R3 ; R4) résistifs montés en série entre une borne négative (GND) et une borne positive (VDD) d'alimentation, lesquels éléments résistifs (R1 ; R2 ; R3 ; R4) présentent à leurs bornes trois noeuds intermédiaires, appelés successivement depuis la borne négative d'alimentation vers la borne positive d'alimentation, premier, deuxième et troisième noeuds intermédiaires, **en ce que** le dispositif de gestion comporte en outre un module d'alimentation (10 ; 11), lequel génère une tension qui peut prendre soit une valeur voisine du potentiel de la borne négative d'alimentation, soit une valeur voisine du potentiel de la borne positive d'alimentation, et **en ce que** le premier contact (C1) est connecté à la sortie du module d'alimentation (10 ; 11), tandis que le potentiel du deuxième noeud intermédiaire est appliqué au deuxième contact (C2) sous une impédance (Z) élevée devant la résistance générée par le contact avec l'objet conducteur à détecter, et **en ce que** le dispositif de gestion est muni de moyens (20) pour effectuer la comparaison entre le potentiel (VC2) du deuxième contact (C2) et celui du premier noeud intermédiaire d'une part, et le potentiel (VC2) du deuxième contact (C2) et celui du troisième noeud intermédiaire d'autre part.

2. Système de détection selon la revendication 1, **caractérisé en ce que** le deuxième noeud intermédiaire est relié au deuxième contact (C2) au moyen d'un amplificateur opérationnel suiveur (A), placé en série avec un élément résistif de forte résistance (Rx).

3. Système de détection selon l'une des revendications 1 ou 2,
**caractérisé en ce que** les moyens de comparaison (20) inclus dans le dispositif de gestion comportent un premier et un deuxième amplificateurs opérationnels comparateurs (A1 ; A3), le premier (A1) de ceux-ci ayant sa borne inverseuse reliée au deuxième contact (C2), sa borne non-inverseuse reliée au premier noeud intermédiaire, et sa sortie à une entrée d'une porte logique NON-OU EXCLUSIF à deux entrées (21), le deuxième amplificateur opérationnel comparateur (A3) ayant sa borne inverseuse reliée au deuxième contact (C2), sa borne non-inverseuse reliée au troisième noeud intermédiaire, et sa sortie reliée à l'autre entrée de ladite porte logique NON-OU EXCLUSIF (21).

4. Système de détection selon l'une des revendications 1 à 3, **caractérisé en ce que** le module d'alimentation (11) inclus dans le dispositif de gestion génère une tension qui, au cours d'un régime transitoire, évolue progressivement depuis un potentiel voisin de celui de la borne négative d'alimentation (GND) vers un potentiel voisin de celui de la borne positive d'alimentation (VDD), puis, au cours d'un régime permanent conserve ledit potentiel, et **en ce que** le dispositif de gestion est muni d'un dispositif (30) dit de masquage lui permettant d'ignorer les comparaisons entre les potentiels des noeuds intermédiaires et celui du deuxième contact (C2) pendant la durée du régime transitoire.

5. Système de détection selon la revendication 4, **caractérisé en ce que** le dispositif de masquage (30) comporte un monostable (23) dont la sortie est au niveau logique 1 pendant une durée prédéterminée correspondant à la durée du régime transitoire et au niveau logique 0 au cours du régime permanent, monostable (23) dont la sortie est connectée à une entrée d'une porte logique OU (22) à deux entrées, la sortie des moyens de comparaison (20) étant connectée à l'autre entrée de ladite porte logique OU (22).

## Claims

1. A system for the detection of the presence of an electrically conductive object, the system comprising a first and a second contact (C1; C2) intended to be short-circuited by said object, and further comprising a control device for the electric potentials of the contacts, **characterized in that** the control device comprises at least four resistive elements (R1; R2; R3; R4) arranged in series between a negative supply terminal (GND) and a positive supply terminal (VDD), which resistive elements (R1; R2; R3; R4) have three intermediate nodes between their ends, which nodes, going from the negative supply terminal to the positive supply terminal are referred to as the first, the second and the third intermediate node, **in that** the control device further comprises a supply module (10; 11), which generates a voltage which can assume either a value near the potential of the negative supply terminal or a value near the potential on the positive supply terminal, and **in that** the first contact (C1) is connected to the output of the supply module (10; 11), while the potential of the second intermediate node is applied to the second contact (C2) at a high impedance (Z) with respect to the resistance generated by the contact with the conductive object to be detected, and **in that** the control device comprises means (20) for performing the comparison between the potential (VC2) of the second contact (C2) and that of the first intermediate node, on the one hand, and the potential (VC2) of the second contact (C2) and that of the third intermediate node, on the other hand.

2. A detection system as claimed in claim 1, **characterized in that** the second intermediate node is coupled to the second contact (C2) by means of an operational follower amplifier (A) arranged in series with a resistive element (Rx) having a high resistance.

3. A detection system as claimed in claim 1 or 2, **characterized in that** the comparison means (20) incorporated in the control device comprise a first and a second operational comparator amplifier (A1; A3), of which the first one (A1) of these has its inverting terminal coupled to the second contact (C2), its non-inverting terminal coupled to the first intermediate node, and its output coupled to one input of a two-input EXCLUSIVE-NOR logic gate (21), the second operational comparator amplifier (A3) having its inverting terminal coupled to the second contact (C2), its non-inverting terminal coupled to the third intermediate node, and its output coupled to the other input of said EXCLUSIVE-NOR logic gate (21).

4. A detection system as claimed in any one of the claims 1 to 3, **characterized in that** the supply module (11) incorporated in the control device generates a voltage which, during a transitional mode, changes gradually from a potential near that of the negative supply terminal (GND) to a potential near that of the positive supply terminal (VDD) and which subsequently keeps this potential during a permanent mode, and **in that** the control device comprises a masking device (30) enabling the control device to ignore the comparisons between the potentials of the intermediate nodes and the potential of the second contact (C2) for the duration of the transition mode.

5. A detection system as claimed in claim 4, **characterized in that** the masking device (30) comprises a monostable multivibrator (23) whose output is at the logic 1 level for a predetermined time corresponding to the duration of the transition mode and at the logic 0 level for the duration of the permanent mode, which monostable multivibrator (23) has its output connected to an input of a two-input logic OR gate (22), the output of the comparison means (20) being connected to the other input of said logic OR gate (22).

## Patentansprüche

1. System zur Feststellung der Anwesenheit eines stromleitenden Objekts, das mit einem ersten und einem zweiten Kontakt ausgestattet ist (C1; C2), die dazu bestimmt sind, von diesem Objekt kurzgeschlossen zu werden, das ferner mit einer Vorrichtung zur Verwaltung der elektrischen Potentiale der Kontakte ausgestattet ist, **dadurch gekennzeichnet, dass** die Verwaltungsvorrichtung zumindest vier Widerstandselemente (R1; R2; R3; R4) umfasst, die in Reihe zwischen einer negativen (GMD) und einer positiven (VDD) Versorgungsklemme geschaltet sind, wobei diese Widerstandselemente (R1; R2; R3; R4) an ihren Klemmen drei Zwischenknoten aufweisen, die nacheinander von der negativen Versorgungsklemme zur positiven Versorgungsklemme erster, zweiter und dritter Zwischenknoten genannt werden, dadurch, dass die Verwaltungsvorrichtung darüber hinaus ein Versorgungsmodul (10; 11) umfasst, das eine Spannung erzeugt, die entweder einen Wert in der Nähe des Potentials der negativen Versorgungsklemme oder einen Wert in der Nähe des Potentials der positiven Versorgungsklemme annehmen kann, und dadurch, dass der erste Kontakt (C1) mit dem Ausgang des Versorgungsmoduls (10; 11) verbunden ist, wogegen das Potential des zweiten Zwischenknotens am zweiten Kontakt (C2) anliegt bei einer hohen Impedanz (Z) vor dem vom Kontakt mit dem festzustellenden leitenden Objekt erzeugten Widerstand, und dadurch, dass die Verwaltungsvorrichtung mit Mitteln (20) ausgestattet ist, um den Vergleich zwischen dem Potential (VC2) des zweiten Kontakts (C2) und dem des ersten Zwischenknotens einerseits und dem Potential (VC2) des zweiten Kontakts (C2) und dem des dritten Zwischenknotens andererseits durchzuführen.

2. System zur Feststellung nach Anspruch 1, **dadurch gekennzeichnet, dass** der zweite Zwischenknoten mit dem zweiten Kontakt (C2) mittels eines operativen Folgeverstärkers (A) verbunden ist, der in Reihe mit einem Widerstandselement hohem Widerstands (Rx) angeordnet ist.

3. System zur Feststellung nach einem der Ansprüche 1 oder 2, **dadurch gekennzeichnet, dass** die Vergleichsmittel (20), die in der Verwaltungsvorrichtung inbegriffen sind, einen ersten und einen zweiten operativen Vergleichsverstärker (A1; A3) umfassen, wobei die Umkehrklemme des ersten Verstärkers (A1) mit dem zweiten Kontakt (C2) verbunden ist, seine Nicht-Umkehrklemme mit dem ersten Zwischenknoten verbunden ist, und sein Ausgang mit einem Eingang eines logischen Verknüpfungsglieds NEIN-ODER EXKLUSIV mit zwei Eingängen (21) verbunden ist, wobei die Umkehrklemme des zweiten operativen Vergleichsverstärkers (A3) mit dem zweiten Kontakt (C2) verbunden ist, seine Nicht-Umkehrklemme mit dem dritten Zwischenknoten verbunden ist und sein Ausgang mit dem anderen Eingang des logischen Verknüpfungsglieds NEIN-ODER EXKLUSIV (21) verbunden ist.

4. System zur Feststellung nach einem der Ansprüche 1 bis 3, **dadurch gekennzeichnet, dass** das Versorgungsmodul (11), das in der Verwaltungsvorrichtung inbegriffen ist, eine Spannung erzeugt, die sich im Verlauf eines Übergangsbetriebs progressiv von einem Potential in der Nähe des Potentials der negativen Versorgungsklemme (GND) in Richtung eines Potentials in der Nähe des Potentials der positiven Versorgungsklemme (VDD) entwickelt und dann während eines ständigen Betriebs das genannte Potenzial beibehält, und dadurch, dass die Verwaltungsvorrichtung mit einer als Maskierungsvorrichtung (30) bezeichneten Vorrichtung versehen ist, die es ihr ermöglicht, die Vergleiche zwischen den Potentialen der Zwischenknoten und dem Potenzial des zweiten Kontakts (C2) während der Dauer des Übergangsbetriebs zu vernachlässigen.

5. System zur Feststellung nach Anspruch 4, **dadurch gekennzeichnet, dass** die Maskierungsvorrichtung (30) einen Monoflop (23) umfasst, dessen Ausgang sich innerhalb einer vorbestimmten Dauer, die der Dauer des Übergangsbetriebs entspricht, auf der logischen Ebene 1 befindet und während des ständigen Betriebs auf der logischen Ebene 0, wobei der Ausgang des Monoflops (23) mit einem Eingang eines logischen Verknüpfungsglieds ODER (22) mit zwei Eingängen verbunden ist, wobei der Ausgang der Vergleichsmittel (20) mit dem anderen Eingang dieses logischen Verknüpfungsglieds ODER (22) verbunden ist.
